# DEMANDE DE BREVET EUROPEEN

(11) **EP 1 605 603 A1**
(43) Date de publication de la demande: **14.12.2005**
(21) Numéro de dépôt: 05291216.9
(22) Date de dépôt: 07.06.2005
(51) Int. Cl.: H04B 3/54, H04N 7/173, H04N 7/10

(54) **Distribution audiovisuelle locale à courants porteurs**

(30) Priorité: 08.06.2004 FR 0406160
(71) Demandeur: Defidev, 92170 Vanves (FR)
(72) Inventeur: Lobert, Jean-Pierre, 92170 Vanves (FR)
(74) Mandataire: Hirsch & Associés

(57) **Abrégé**

L'installation comprend :
- un réseau local (1) ;
- au moins une tête de réseau (2a, 2b) qui reçoit des données audio et/ou vidéo d'au moins une source (6a-6e) extérieure au réseau local, les code sous forme numérique selon une norme donnée et les envoie ainsi codées sur le réseau local (1); et
- au moins un modem récepteur (3) qui reçoit depuis le réseau local (1) lesdites données audio et/ou vidéo et les décode, le modem récepteur (3) comprenant une interface pour les restituer par exemple sur un téléviseur (7).

Un gestionnaire de réseau (4) gère l'utilisation des ressources du réseau local (1).

La tête de réseau (2b) peut aussi fournir un accès à l'Internet (6g) auquel cas un ordinateur (8) peut être connecté au modem récepteur. Les modems récepteurs peuvent être connectés au réseau local (1) à l'aide de coupleurs (5).

## Description

La présente invention concerne une installation de transmission locale de données audio et/ou vidéo, ainsi qu'une tête de réseau et un modem récepteur utilisables pour la mise en oeuvre de l'installation.

Avec l'arrivée de la transmission par câble et surtout par satellites, plusieurs milliers de chaînes TV sont disponibles aujourd'hui. Mais cette multiplication de l'offre implique la multiplication des câbles coaxiaux à installer dans l'habitat, qu'il soit collectif ou individuel, pour donner aux consommateurs l'accès à cette multitude de chaînes. Par exemple, l'accès collectif en immeuble aux programmes de deux satellites nécessite typiquement la mise en place d'au moins une colonne verticale de distribution formée de quatre câbles coaxiaux et un sélecteur de sources télécommandé au protocole DiSEqC, dans chaque colonne de distribution au droit de chaque appartement. L'installation de multiples câbles coaxiaux a pour inconvénient d'être onéreuse et encombrante. De plus, l'évolution de l'installation pour permettre l'accès des utilisateurs à de nouvelles offres nécessite de ré intervenir sur l'installation en ajoutant des câbles coaxiaux additionnels.

Dans le cas où un accès au réseau Internet est souhaité, notamment l'accès collectif à Internet par le câble, par ADSL ou par satellite, il est nécessaire de déployer un réseau filaire dédié dans l'immeuble, ce qui aggrave encore cet inconvénient.

Par ailleurs, l'accès aux différentes sources - câble, ADSL, satellites, etc... - nécessite aussi l'installation chez chaque utilisateur - notamment dans chaque appartement dans le cas des immeubles collectifs - de nombreux modems décodeurs-décrypteurs et des boîtiers de sélection des sources vers le ou les téléviseurs. Les interfaces de programmation, de configuration et de sélection des programmes sont généralement très variables d'une source à l'autre. Une telle installation a pour inconvénient non seulement d'être encombrante, mais aussi compliquée d'utilisation pour l'utilisateur qui doit maîtriser l'utilisation de chacune des interfaces et manier généralement plusieurs télécommandes.

La situation devient encore plus complexe lorsque l'on souhaite disposer d'un réseau de vidéo interphonie, de vidéo surveillance ou de vidéo à la demande. L'incompatibilité des normes implique de multiplier les réseaux de distribution indépendants dans l'immeuble ainsi que les postes de visualisation ou de surveillance.

Enfin, il est extrêmement difficile de permettre une gestion à distance de l'ensemble de ces installations étant donné leur hétérogénéité.

L'invention a pour objectif de pallier au moins partiellement ces inconvénients. En particulier, l'invention vise à fournir un réseau local de distribution numérique permettant un accès simplifié et rationalisé aux différentes sources de données.

A cette fin, la présente invention propose une installation, comprenant :
- un réseau local ;
- au moins une tête de réseau prévue pour recevoir des données audio et/ou vidéo d'au moins une source extérieure au réseau local, pour coder sous forme numérique lesdites données audio et/ou vidéo selon une norme donnée et pour envoyer lesdites données audio et/ou vidéo codées selon ladite norme sur le réseau local ; et
- au moins un modem récepteur prévu pour recevoir depuis le réseau local lesdites données audio et/ou vidéo et pour les décoder, le modem récepteur comprenant une interface pour restituer lesdites données audio et/ou vidéo.

Suivant des modes de réalisation préférés, l'installation comprend une ou plusieurs des caractéristiques suivantes :
- la tête de réseau est prévue pour coder sous forme numérique selon une même norme donnée des données audio et/ou vidéo reçues sous forme codée selon plusieurs normes différentes, ces données reçues pouvant être sous forme numérique ou analogique ;
- la tête de réseau et le réseau local sont prévus pour transmettre plusieurs flux de données audio et/ou vidéo distincts simultanément ;
- le réseau local est réparti en plusieurs canaux de transmission de données dont l'utilisation est gérée par un gestionnaire de réseau ;
- le modem récepteur comprend une interface utilisateur permettant à un utilisateur de sélectionner l'une quelconque parmi une pluralité de sources extérieures et/ou un flux de données audio et/ou vidéo quelconque parmi plusieurs flux disponibles sur une source extérieure, le modem récepteur étant prévu pour envoyer sur le réseau local une requête d'accès à la source extérieure sélectionnée et/ou au flux de données audio et/ou vidéo sélectionné ;
- ladite au moins une source extérieure comprend au moins une source de réception d'une pluralité de chaînes TV, la tête de réseau étant prévue pour démoduler et syntoniser les chaînes TV reçues en fonction de commandes reçues depuis le réseau local ;
- ladite au moins une source extérieure comprend au moins une caméra de vidéo surveillance ;
- la tête de réseau est reliée à un réseau de transmission de données numériques distinct du réseau local et permet au modem récepteur d'envoyer vers et de recevoir depuis ledit réseau distinct des données numériques ;
- une source extérieure procure simultanément un nombre N de flux de données audio et/ou vidéo et la tête de réseau est capable de recevoir, coder et envoyer sur le réseau local de façon simultanée au maximum un nombre M donné de flux de données audio et/ou vidéo provenant de ladite source extérieure, avec M inférieur à N, l'installation comprenant un nombre P de modems récepteurs ayant le droit d'accéder au nombre N de flux de données audio et/ou vidéo procurés par ladite source extérieure, avec P supérieur à M et l'installation comprend un gestionnaire de réseau affectant de façon dynamique le nombre M de flux de données audio et/ou vidéo transmis par la tête de réseau audit nombre P de modems récepteurs ;
- le réseau local est à courants porteurs, la tête de réseau et le modem récepteur comprenant chacun un modem courants porteurs connecté au réseau local.

Selon un autre aspect, l'invention propose aussi un site comprenant une installation selon ce dernier mode de réalisation, le réseau local étant constitué sur le réseau d'alimentation en énergie électrique du site.

Plus généralement, l'invention propose un site comprenant une installation selon l'invention. Le site comprend préférentiellement une pluralité de modems récepteurs placés dans différents locaux. Selon un mode de réalisation préféré, ladite au moins une source extérieure comprend une caméra et un microphone d'un système de vidéo interphonie placé à une entrée du site et en ce que la tête de réseau est prévue pour décoder des données numériques audio reçues depuis le réseau local et restituer ces données audio sur un haut-parleur du système de vidéo interphonie.

Selon un autre aspect, l'invention propose une tête de réseau, comprenant :
- des moyens de connexion à un réseau local ;
- des moyens de réception de données audio et/ou vidéo provenant d'au moins une source extérieure ;
- des moyens de codage sous forme numérique selon une norme donnée des données audio et/ou vidéo reçues par les moyens de réception, ces données reçues pouvant être sous forme numérique ou analogique ; et
- des moyens d'envoi des données audio et/ou vidéo codées selon ladite norme sur le réseau local.

Suivant des modes de réalisation préférés, l'installation comprend une ou plusieurs des caractéristiques suivantes :
- les moyens de codage sont prévus pour coder sous forme numérique selon une même norme donnée des données audio et/ou vidéo reçues sous forme codées par les moyens de réception selon plusieurs normes différentes ;
- les moyens de réception sont prévus pour recevoir simultanément plusieurs flux de données audio et/ou vidéo distincts et les moyens d'envoi sont prévus pour transmettre simultanément lesdits flux de données audio et/ou vidéo sur le réseau local après codage ;
- les moyens de réception sont prévus pour recevoir les signaux d'une source de réception d'une pluralité de chaînes TV, la tête de réseau étant prévue pour démoduler et syntoniser l'une quelconque des chaînes TV en fonction de commandes reçues depuis le réseau local et la source de réception peut être avantageusement une antenne de réception TV par satellite ;
- la tête de réseau comprend des moyens de transmission à la source extérieure de commandes reçues sous forme numérique depuis le réseau local ;
- la tête de réseau comprend des moyens de codage des commandes reçues depuis le réseau local, les moyens de transmission étant prévue pour transmettre à la source extérieure les commandes codées ;
- la tête de réseau comprend des moyens de transmission vers un élément extérieur de données audio et/ou vidéo reçues sous forme numérique depuis le réseau local ;
- la tête de réseau comprend des moyens de codage des données audio et/ou vidéo reçues depuis le réseau local, les moyens de transmission étant prévue pour transmettre vers l'élément extérieur les données audio et/ou vidéo codées ;
- les moyens de réception sont prévus pour recevoir simultanément plusieurs flux de données audio et/ou vidéo distincts, la tête de réseau étant prévue pour transmettre après codage un ou plusieurs desdits flux sur le réseau local en fonction de commandes reçues depuis le réseau local ;
- la tête de réseau comprend un bus auquel sont reliés les moyens d'envoi et les moyens de réception comprennent une pluralité de modules de réception de données audio et/ou vidéo de source extérieure, chaque module étant relié au bus ;
- chaque module est prévu pour coder sous forme numérique selon une norme donnée les données audio et/ou vidéo reçues par le module de la source extérieure correspondante ;
- la tête de réseau comprend des moyens de communication avec un réseau de transmission de données distinct du réseau local, la tête de réseau étant prévue pour transmettre bi directionnellement des données numériques entre le réseau local et le réseau distinct ;
- les moyens d'envoi sur le réseau local comprennent un modem courants porteurs ;
- le modem courants porteurs est prévu pour transmettre plusieurs flux de données audio et/ou vidéo distincts simultanément par multiplexage par répartition orthogonale de la fréquence.

D'autres caractéristiques et avantages de l'invention apparaîtront à la lecture de la description qui suit d'un mode de réalisation préféré de l'invention, donnée à titre d'exemple et en référence au dessin annexé.

La figure 1A est un schéma de principe d'une installation selon l'invention.

La figure 1B représente schématiquement une vue en coupe verticale d'un immeuble doté d'une installation selon l'invention.

Les figures 2A et 2b sont des schémas des têtes de réseau de l'installation de la figure 1B.

La figure 3 est un schéma du gestionnaire de réseau de l'installation de la figure 1B.

La figure 4 est un schéma d'un modem récepteur de l'installation de la figure 1B.

La figure 5 est un schéma du coupleur de l'installation de la figure 1B.

Une installation selon l'invention, comprend un réseau local, au moins un modem récepteur et au moins une tête de réseau. La tête de réseau est prévue pour recevoir des données audio et/ou vidéo d'au moins une source extérieure au réseau local. Ces données peuvent être reçues par la tête de réseau sous forme numérique, voire sous forme analogique selon le cas. La tête de réseau code sous forme numérique lesdites données audio et/ou vidéo selon une norme donnée et les envoie après codage selon cette norme sur le réseau local. Le modem récepteur est prévu pour recevoir depuis le réseau local les données audio et/ou vidéo ainsi codées et pour les décoder. Le modem récepteur comprend une interface sur laquelle il restitue les données audio et/ou vidéo décodées pour un équipement final, par exemple un téléviseur.

Le modem récepteur permet donc de restituer les données audio et/ou vidéo fournies par les différentes sources extérieures auxquelles la tête de réseau a accès et ceci indépendamment des formats ou normes de codage dans lesquels la tête de réseau reçoit les données audio et/ou vidéo des sources extérieures. De plus, le modem récepteur offre l'accès aux différentes sources sans requérir une liaison filaire ou autre entre le modem récepteur et chacune des sources extérieures. Au contraire, toutes les liaisons avec les sources sont concentrées par la tête de réseau. En outre, pour donner accès à une nouvelle source de données audio et/ou vidéo, il suffit de faire évoluer la tête de réseau par ajout de nouveau module ou adjoindre une tête de réseau supplémentaire pour prendre en charge la nouvelle source de données alors que le reste de l'installation reste inchangée.

Les données fournies par les sources extérieures peuvent être du type audiovisuel comme par exemple dans le cas de chaînes TV ou de la vidéo interphonie. Mais il peut aussi s'agir de données uniquement du type vidéo par exemple dans le cas de caméras de surveillance ou de données uniquement du type audio par exemple dans le cas de chaînes radiophoniques.

L'installation peut être dédiée exclusivement à la transmission de données vidéo par exemple dans le cas d'une installation dédiée exclusivement à la vidéosurveillance. Au contraire, elle peut être dédiée uniquement à la distribution de données audio par exemple la distribution de chaînes radiophoniques.

Mais dans son application privilégiée, l'installation est utilisée pour la transmission de données audio et vidéo, notamment pour la distribution audiovisuelle telle que des chaînes TV et la vidéo interphonie. Dans ce cas, l'installation peut en plus être utilisée pour transmettre des données purement vidéo ou audio telles que dans le cas de la vidéosurveillance ou la diffusion des chaînes radiophoniques.

L'installation est avantageusement conçue pour recevoir les données audio et/ou vidéo des sources extérieures et les transmettre à l'équipement final en temps réel.

L'installation peut en outre servir à transmettre des données numériques autres que des données audio et/ou vidéo.

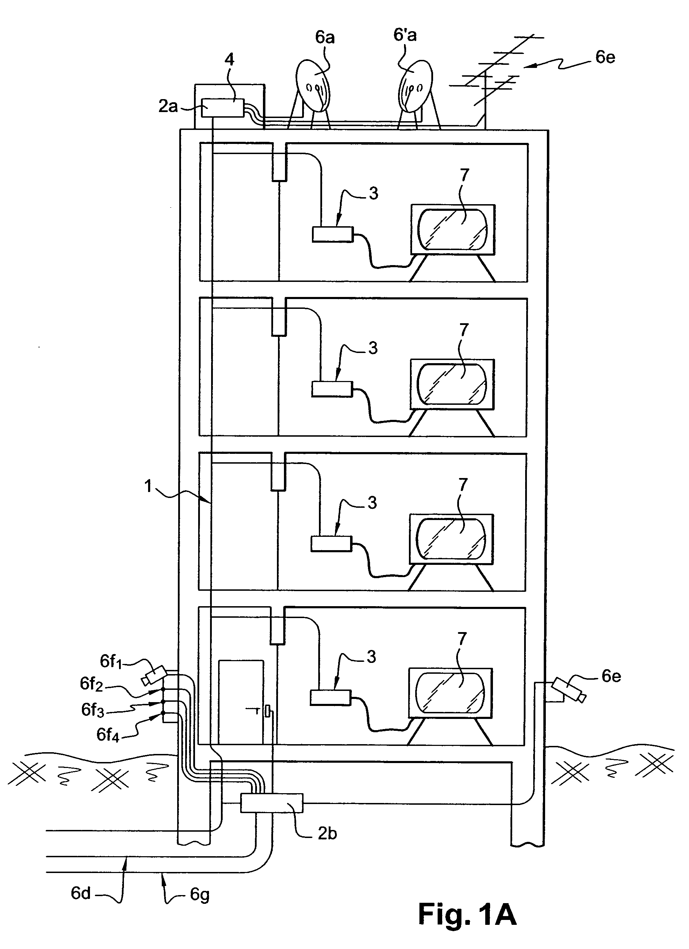

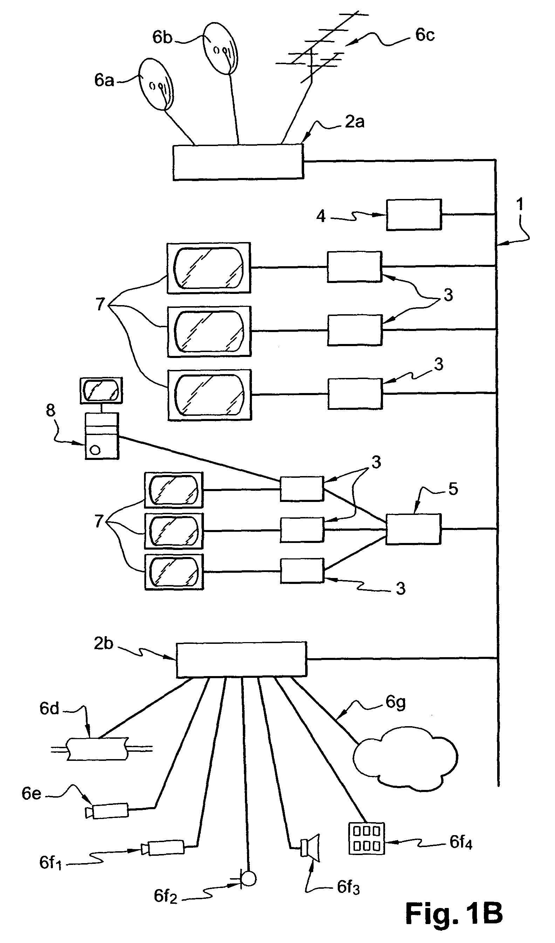

Une installation selon l'invention va être décrite plus particulièrement en relation avec les figures 1A et 1B. La figure 1A montre schématiquement une vue en coupe verticale d'un immeuble de quatre étages, avec un appartement par étage, doté d'une installation selon l'invention. La figure 1B montre un schéma synoptique de l'installation de l'immeuble de la figure 1A. Nous allons d'abord décrire le fonctionnement général de l'installation avant de décrire plus en détail chacun de ses composants en référence aux autres figures.

L'installation comprend un réseau local formé par un câble de distribution 1 auquel sont reliés deux têtes de réseau 2a et 2b, des modems récepteurs 3 et un gestionnaire de réseau 4.

Le câble de distribution 1 constitue le support physique du réseau local permettant la communication entre la tête de réseau 2, les modems récepteurs 3 et le gestionnaire de réseau 4. Le câble de distribution 1 est un câble électrique et la communication entre les différents éléments du réseau se fait par courants porteurs. Le câble de distribution 1 est avantageusement la colonne montante d'électricité qui alimente les différents appartements en énergie électrique. En variante, il peut également s'agir d'un câble coaxial formant une colonne verticale de distribution télévisuelle. Un tel câble peut être préexistant dans l'immeuble, par exemple pour fournir aux différents appartements les signaux d'une antenne hertzienne de réception TV ou un câble coaxial de distribution TV d'un opérateur terrestre.

Les réseaux électriques existants aussi bien que les câbles coaxiaux de distribution vidéo déjà en place permettent des transmissions par courants porteurs avec une bande passante de plus de 200 Mbs, ce qui autorise la transmission d'environ 100 chaînes TV numérisées simultanément. La bande passante disponible sur le câble de distribution 1 est partagée en différents canaux permettant une transmission simultanée en temps réel de plusieurs flux de données audio et/ou vidéo. Le gestionnaire de réseau 4 assure la gestion de l'utilisation des différents canaux. Cette répartition en différents canaux est réalisée de préférence sous forme de canaux virtuels, les différents flux de données étant transmis par exemple par multiplexage fréquentiel et/ou par multiplexage temporel. En particulier, un multiplexage par répartition orthogonale de la fréquence (OFDM) est particulièrement adaptée pour la transmission haut débit par courant porteurs sur le réseau de distribution électrique du fait de sa robustesse aux perturbations de toutes sortes et par son optimisation de l'occupation spectrale des fréquences disponibles. Alternativement, il peut être recouru à un multiplexage temporel des flux de données, mais dans ce cas il est préférable pour certains flux comme la téléphonie numérique de mettre en oeuvre un multiplexage en fréquences afin de garantir la disponibilité du canal de téléphonie et une latence minimale. En d'autres termes, les deux techniques de multiplexage peuvent être mises en oeuvre simultanément en répartissant par exemple le domaine spectrale disponible (par exemple de 1 à 40 MHz) en deux bandes dédiées chacune à une technique de multiplexage respective et en privilégiant l'usage de ces bandes aux applications en fonction de leurs exigences.

Les têtes de réseau 2a, 2b sont reliées aux différentes sources extérieures de données que l'on souhaite mettre à disposition d'un ou plusieurs appartements de l'immeuble.

Dans notre exemple, la tête de réseau 2a est reliée à :
- deux antennes de réception TV par satellite 6a et 6b, chacune pour un autre satellite qui envoie les données audiovisuelles codées selon une norme différente, et
- une antenne hertzienne de réception TV 6c. Et la tête de réseau 2b est reliée à :

- un câble d'opérateur TV 6d,
- une caméra de vidéosurveillance 6e,
- une caméra 6f₁, un microphone 6f₂, un circuit à haut-parleur 6f₃ et un circuit à clavier de sélection d'appartement 6f₄ montés sur une platine à l'entrée de l'immeuble pour mettre en oeuvre un système de vidéo interphonie 6f, ainsi qu'à un dispositif d'ouverture 6f₅ de la porte d'entrée de l'immeuble, et
- une ligne ADSL d'accès à Internet 6g.

Chaque tête de réseau 2a, 2b est prévue pour recevoir les données fournies par les sources correspondantes et pour les transférer sur le réseau local 1.

Lorsque ces sources fournissent des données audio et/ou vidéo, chaque tête de réseau 2a, 2b assure le codage de ces données dans un format numérique suivant une norme donnée décodable par les modems récepteurs 3 destinataires et les envoie ainsi codées sur le réseau local 1.

Dans le cas où les données audio et/ou vidéo fournies à une tête de réseau 2a, 2b par des sources extérieures sont en fait des signaux analogiques comme ce peut être le cas pour l'antenne hertzienne 6c, la caméra de vidéosurveillance 6e et la caméra 6f et le microphone 6f₂ de vidéo interphonie, la tête de réseau 2a, 2b correspondante les numérise et assure leur codage comme indiqué précédemment.

Cependant, les données audio et/ou vidéo incluses dans les flux provenant de l'Internet ne font pas l'objet d'un codage vers un format selon une autre norme par la tête de réseau 2a. En effet, les données numériques provenant de l'Internet sont transmises en l'état sur le réseau local 1 par la tête de réseau 2a car le modem récepteur 3 destinataire de ces données n'a pas à les décoder, mais les transmet aussi en l'état à l'équipement qui en est le destinataire final, par exemple un ordinateur.

Chaque tête de réseau 2a, 2b est capable d'envoyer simultanément en temps réel plusieurs flux de données extérieures audio et/ou vidéo ou autres sur le réseau local 1, ce qui permet de desservir simultanément plusieurs modems récepteurs 3.

Les têtes de réseau 2a, 2b sont aussi prévues pour recevoir les données à destination des sources extérieures qui lui sont envoyées via le réseau local 1, du moins lorsque cette possibilité est prévue. Il s'agit par exemple de données à transmettre vers le réseau public de l'Internet sur la ligne ADSL 6g ou de données audio à restituer sur le haut-parleur 6f₃ de la vidéo interphonie.

Les têtes de réseau 2a, 2b sont encore prévues pour recevoir les commandes de contrôle des sources extérieures qui leur sont envoyées via le réseau local 1 du moins lorsque cette possibilité existe. Les têtes de réseau 2a, 2b exécutent ces ordres elles-mêmes si elles sont prévues pour cela. Il s'agit par exemple de commandes de syntonisation destinées à un syntoniseur pour l'antenne satellite 6a ou 6b inclus dans la tête de réseau 2a ou encore d'une commande d'ouverture de la porte de l'immeuble exécutée par la tête de réseau 2b qui commande le dispositif d'ouverture 6f₅. Si elles ne sont pas prévues pour les exécuter elles-mêmes, les têtes de réseau 2a, 2b transmettent ces commandes- après traduction dans le format requis le cas échéant - à un élément de contrôle extérieur de la source concernée. Il s'agit par exemple de commandes de mouvement de la caméra de vidéosurveillance 6e que la tête de réseau 2b transmet à cette caméra.

Dans chaque appartement auquel on souhaite donner accès aux sources extérieures de données, est installé un ou plusieurs modems récepteurs 3.

Chaque modem récepteur 3 est prévu pour recevoir les données numériques qui lui sont envoyées via le réseau local 1 par la tête de réseau 2 et de les fournir au fur et à mesure de leur réception à l'équipement final auquel ils sont destinés, par exemple un téléviseur 7, un ordinateur 8 (non représenté sur la figure 1A) ou un bloc de vidéo interphonie (non représenté). Comme déjà indiqué, le réseau local 1 et les têtes de réseau 2a, 2b sont capables de transmettre en temps réel les flux de données audio et/ou vidéo. On entend par là que les flux de données audio et/ou vidéo sont transmis à une vitesse suffisante pour permettre une restitution sonore et visuelle à la volée par les modems récepteurs 3 et donc sur l'équipement final destinataire, ceci sans distorsion temporelle du rendu sonore et visuelle.

Chaque modem récepteur 3 comprend aussi une interface utilisateur permettant à l'utilisateur d'envoyer des requêtes vers le gestionnaire de réseau 4 et/ou des commandes vers les têtes de réseau 2a, 2b via le réseau local 1. Ces requêtes peuvent notamment contenir une demande de l'utilisateur pour obtenir l'accès aux données fournies par une des sources extérieures 6a-6g reliées aux têtes de réseau 2a, 2b.

Le gestionnaire de réseau 4 est prévu pour recevoir les requêtes qui lui sont envoyées par les modems récepteurs 3. Le gestionnaire de réseau 4 traite ces requêtes et commande les têtes de réseau 2a,2b le cas échéant pour que celles-ci envoient sur le réseau local 1 les données auxquelles l'accès est demandée dans la requête. Le modem récepteur 3 concerné reçoit alors via le réseau local 1 les données demandées et les fournies à l'équipement final de destination.

L'ensemble des communications entre le gestionnaire de réseau 4, les modems récepteurs 3 et les têtes de réseau 2a, 2b se font de préférence au protocole IP, mais d'autres protocoles peuvent être utilisés tel que l'ATM.

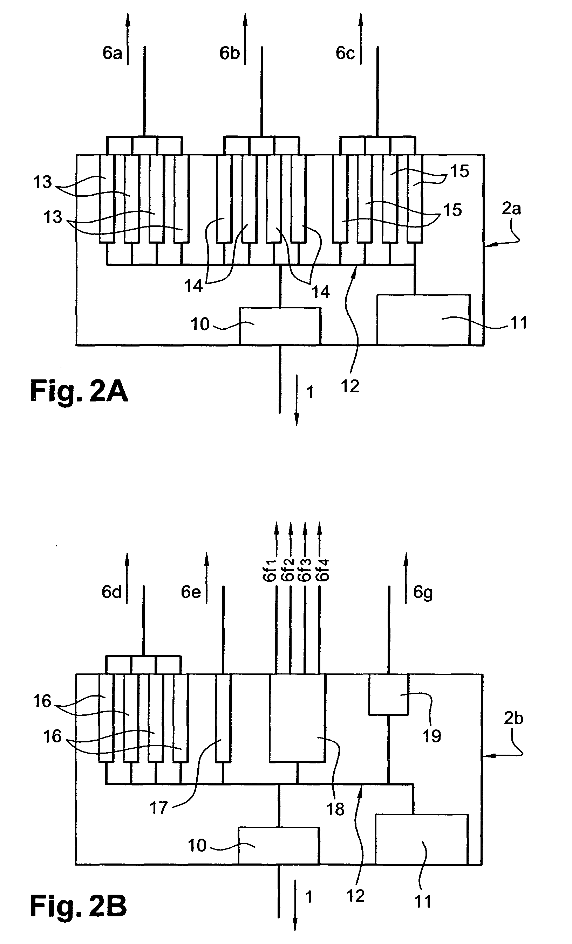

Nous allons maintenant décrire plus en détails la tête de réseau 2a en relation avec la figure 2A. La tête de réseau 2a est organisée autour d'un bus numérique 12 auquel sont reliés différents modules de sources 13-15, une unité centrale à processeur 11 et un modem courants porteurs 10.

Le modem courants porteur 10 est relié au câble de distribution 1 et permet la communication de la tête de réseau 2a avec les modems récepteurs 3 et le gestionnaire de réseau 4.

Une première série de quatre modules 13 identiques sont des modules de réception TV par satellite reliés à l'antenne satellite 6a. Chaque module 13 assure les fonctions de réception, de démodulation et de syntonisation des chaînes TV numériques reçues par l'antenne satellite 6a sous la commande de l'unité centrale 11. Si le format numérique de la norme de diffusion satellite dans lequel le module 13 reçoit les données audiovisuelles de la chaîne TV syntonisée n'est pas exploitable par les modems récepteurs 3 destinataires, le module 13 assure le transcodage des données audiovisuelles vers un format numérique selon une norme exploitable par les modems récepteurs 3. Par exemple, il s'agit de la norme Mpeg 2 ou Mpeg 4. Sous la commande de l'unité centrale 11, chaque module 13 envoie les données audiovisuelles - après transcodage le cas échéant - sur le bus 12 pour envoi sur réseau local 1 par le modem courants porteurs 10.

Chaque module 13 est indépendant des autres et est capable de syntoniser n'importe quelle chaîne TV diffusée par le satellite correspondant à l'antenne 6a et d'en assurer le transcodage le cas échéant.

Une deuxième série de quatre modules 14 identiques entre eux, sont des modules de réception TV par satellite reliés à l'antenne satellite 6b. Leurs fonctions et leur fonctionnement sont identiques aux modules 13, sauf à être dédiés à un autre satellite sur lequel pointe l'antenne 6b.

Une troisième série de quatre modules 15 identiques entre eux, sont des modules de réception TV hertzienne reliés à l'antenne hertzienne 6c. Chaque module 15 assure la démodulation et la syntonisation des chaînes TV analogiques reçues par l'antenne 6c sous la commande de l'unité centrale 11 et la numérisation du signal de la chaîne TV syntonisée ainsi que le codage des données audiovisuelles correspondantes vers un format numérique selon une norme exploitable par les modems récepteurs 3. Sous la commande de l'unité centrale 11, chaque module 15 envoie les données audiovisuelles ainsi codées sur le bus 12 pour envoi sur réseau local 1 par le modem courants porteurs 10. Là aussi, chaque module 15 est indépendant des autres et est capable de syntoniser n'importe quelle chaîne TV reçue par l'antenne hertzienne 6c.

L'unité centrale 11 assure la gestion de l'utilisation des modules sources 13-15 et du modem courants porteurs 10 de la tête de réseau. Ainsi, toutes les commandes provenant du réseau local 1 sont traitées par l'unité centrale 11 qui commande en conséquence les modules sources et le modem courants porteurs 10.

L'unité centrale 11 répertorie les modules sources présents sur le bus 12 ainsi que leurs fonctionnalités et performances qui lui sont fournis par chaque module source. L'unité centrale 11 communique la liste des modules sources avec leurs fonctionnalités et performances respectives au gestionnaire de réseau 4. Elle surveille également les modules sources et transmet les événements et incidents de fonctionnement au gestionnaire de réseau 4.

L'unité centrale 11 traite aussi les instructions envoyées par le gestionnaire de réseau 4 et les modems récepteurs 3. Ces instructions peuvent concerner toute fonctionnalité de la tête de réseau 2a. Par exemple, il s'agit d'instructions demandant à l'unité centrale 11 de syntoniser un des modules sources 13-15 sur une chaîne TV donnée que l'un des utilisateurs souhaite regarder et d'envoyer les données audiovisuelles correspondantes sur un canal donné du réseau local 1. L'unité centrale 11 commande en conséquence un module source 13-15 et le modem courants porteurs 10.

Il peut être prévu que le logiciel de l'unité centrale 11 puisse être mis à jour par le gestionnaire de réseau 4.

Nous allons maintenant décrire plus en détails la tête de réseau 2b en relation avec la figure 2B. La tête de réseau 2b est structurée de la même manière que la tête de réseau 2a et son fonctionnement est identique, seuls les modules sources étant différents. Pour cette raison, les composants identiques à ceux de la tête de réseau 2a portent les mêmes numéros de référence et nous mentionnerons que les particularités de la tête de réseau 2b.

Une première série de quatre modules 16 identiques entre eux, sont des modules de réception TV par câble terrestre relié au câble 6d d'un opérateur TV terrestre. Chaque module 16 met en oeuvre les fonctions de démodulation, de syntonisation et de transcodage similairement aux modules 13 et 14 de la tête de réseau 2a, mais pour les chaînes TV fournies par le câble 6d.

Un module 17 présente une entrée vidéo à laquelle est reliée à la caméra de vidéosurveillance 6e. Il s'agit de préférence d'une entrée vidéo composite en bande de base et le module 17 peut comprendre un contrôleur de gain. Le module 17 numérise le signal vidéo fournie par la caméra 6e et code ce signal numérisée dans un format selon une norme exploitable par les modems récepteurs 3 destinataires. Les données ainsi codées sont envoyées sur bus 12 à destination du réseau local 1 via le modem 10 sous la commande de l'unité centrale 11.

Lorsque la caméra 6e est apte à être commandée, le module 17 est prévu en outre pour lui envoyer les signaux de commande en fonction des requêtes reçues depuis le réseau local 1 via le modem 10 et le bus 12. Par exemple, ces commandes concernent une fonction zoom de la caméra 6e ou une fonction de déplacement angulaire de celle-ci. Dans ce cas, le module 17 assure le codage des commandes dans le format adéquat pour être exploitable par la caméra 6e ou leur conversion analogique si besoin est.

Un module 18 est relié à la caméra 6f₁, au microphone 6f₂, au circuit à haut-parleur 6f₃, au circuit à clavier de sélection d'appartement 6f₄ et au dispositif d'ouverture de porte 6f₅ pour mettre en oeuvre la vidéo interphonie dans l'immeuble. Le module 18 reçoit et numérise les signaux audio et vidéo fournis par la caméra 6f₁ et le microphone 6f₂ et code ces signaux numérisés dans un format selon une norme exploitable par les modems récepteurs 3 destinataires. Les données ainsi codées sont envoyées sur le bus 12 à destination du réseau local 1 via le modem 10 sous la commande de l'unité centrale 11.

Le module 18 reçoit également les signaux du circuit à clavier de sélection d'appartement 6f₄ lorsque un visiteur l'actionne pour avertir de sa présence un résident de l'immeuble. Le module 18 envoie une requête via le bus 12 et le modem 10 au gestionnaire de réseau 4 pour l'obtention d'un canal du réseau local 1 pour la communication avec le modem récepteur 3 concerné, ce dernier étant averti du canal sélectionné par le gestionnaire de réseau 4. Le module 18 envoie alors via le réseau local 1 à destination du modem récepteur 3 un message d'avertissement au résident de la présence du visiteur.

Le module 18 est également prévu pour restituer sur le haut-parleur du circuit 6f₃ les données audio reçues depuis le réseau local 1 à cette fin. Pour cela, le module 18 décode les données reçues et les convertit en signal analogique appliqué au circuit à haut-parleur 6f₃. Enfin, le module 18 est aussi prévu pour commander le dispositif d'ouverture de porte 6f₅, par exemple par envoi d'une impulsion électrique d'ouverture d'une gâche électrique (interruption du champs magnétique d'une « ventouse »), en fonction de commandes reçues depuis le réseau local 1 via le modem 10 et le bus 12.

Un module 19 est prévu pour accéder au réseau public de l'Internet et est branché dans notre exemple à la ligne ADSL 6g. Le module 19 transfère les données reçues par le réseau public de l'Internet sur le réseau local 1 ou vice-versa. Comme mentionné précédemment, le module 19 ne modifie pas le format numérique des données audio et/ou vidéo qui sont contenues dans ces flux. La transmission des données dans le réseau local 1 se fait suivant une norme appropriée quelconque, par exemple Ethernet 10/100 Mbits/s, voire à 1 Gigabit/s. Le module 19 peut avantageusement intégré les fonctions de routeur et filtrage classiques dans ce type d'équipement.

Les têtes de réseau 2a, 2b sont de préférence modulaires pour pouvoir recevoir différents types et un nombre variable de modules sources en fonction des besoins. Ainsi, il est possible d'adjoindre ou de remplacer des modules sources dans une tête de réseau pour faire évoluer le réseau local 1 en donnant accès à d'autres sources extérieures ou de multiplier la nombre d'accès à une même source. Pour cela, chaque tête de réseau 2a, 2b peut comprendre un boîtier ou un coffret logeant ses différents composants et dans lequel un certain nombre d'emplacements standardisés sont prévus pour recevoir les modules sources par exemple par en fichage.

Préférentiellement, chaque tête de réseau 2a, 2b est placée au plus près des sources auxquelles elle est reliée afin d'éviter de longs câblages entre la tête de réseau et les sources correspondantes. Ainsi, la tête de réseau 2a est placée au niveau du toit de l'immeuble car elle est reliée à des récepteurs aériens et la tête de réseau 2b au niveau du sol car elle est reliée à des sources accessible au sol.

Dans notre exemple, chaque tête de réseau 2a, 2b est reliée à une extrémité du câble de distribution 1 par rapport à l'ensemble des modems récepteurs 3, mais elles peuvent être reliées au câble de distribution 1 en n'importe quel autre endroit par rapport aux modems récepteurs 3.

Bien que dans le mode de réalisation décrit l'installation comprend deux têtes de réseau, l'installation peut en comprendre une seule ou plus de deux notamment en fonction du nombre de modules sources souhaités. Le fait d'en avoir plusieurs permet aussi de les placer en des endroits différents pour rester au plus proche des sources extérieures en cas de dispersion, comme c'est le cas dans le mode de réalisation illustré.

Dans le cas où un module source donné permet d'accéder à un seul flux de données extérieures, la tête de réseau correspondante peut ne comprendre qu'un seul module dédié à cette source. C'est la cas par exemple du module 17 de vidéosurveillance ou du module 18 de vidéo interphonie. En effet, dans ce cas, les données extérieures fournies par un tel module peuvent être diffusées dans le réseau local vers plusieurs modems récepteurs 3 si plusieurs d'entre eux souhaitent y accéder simultanément. Cette possibilité de diffusion sera détaillée ultérieurement en décrivant le gestionnaire de réseau 4.

Dans le cas où un module source donné permet d'accéder à plusieurs flux de données extérieures mais sans avoir la possibilité d'en transmettre plusieurs simultanément sur le bus 12, la ou les têtes de réseau comprennent préférentiellement un nombre de modules dédiés à cette source qui est égal au nombre de modems récepteurs 3 qui ont le droit d'y accéder. Par exemple, un module 13 de réception TV par satellite peut donner accès à plusieurs centaines de chaîne TV différentes, mais il ne peut être syntonisé que sur l'une des chaînes à un instant donné. S'il y a plusieurs modems récepteurs 3 qui ont le droit d'accéder aux chaînes de ce satellite, le fait d'avoir un nombre de modules 13 tel que défini permet à tous ces modems récepteurs 3 de recevoir simultanément une chaîne TV respective quelconque de ce satellite. Chacun de ces modules sources peut être affecté à un modem récepteur 3 prédéterminé. En variante, la tête de réseau concernée ou le gestionnaire de réseau 4 peut affecter dynamiquement les modules sources aux modems récepteurs 3 en fonction des requêtes d'accès présentées par ces derniers.

Cependant, si le nombre de flux de données extérieures distincts auquel cette source donne accès est inférieur au nombre de modems récepteurs 3 ayant le droit d'y accéder, alors le nombre de modules dédiés à cette source peut être égal à ce nombre de flux de données extérieures distincts dans le cas où le réseau local permet la diffusion d'un flux de données vers plusieurs modems récepteurs 3. Par exemple, ce peut être le cas de l'antenne TV hertzienne 6e donnant accès à six chaînes TV alors qu'il y a 40 modems récepteurs 3 dans l'immeuble qui ont le droit d'accéder à cette source.

Néanmoins, le gestionnaire de réseau 4 peut également mettre en oeuvre une gestion dynamique des ressources permettant de diminuer le nombre de modules dédiés à chaque source extérieure. Nous reviendrons sur cette possibilité ultérieurement en décrivant le gestionnaire de réseau 4.

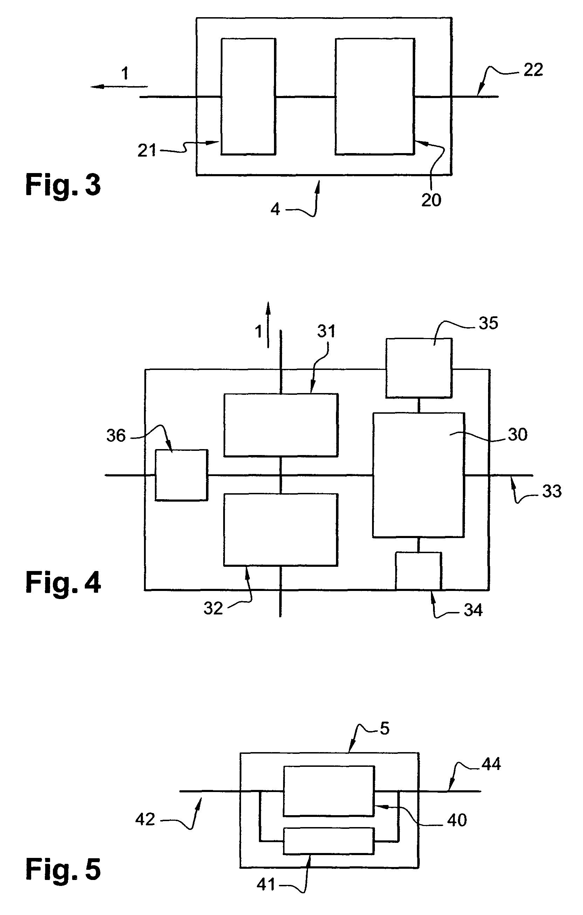

Nous allons maintenant décrire plus en détails le gestionnaire de réseau 4 en relation avec la figure 3. Le gestionnaire de réseau 4 comprend une unité centrale à processeur 20 et un modem courants porteurs 21 relié au câble de distribution 1 grâce auquel l'unité centrale 20 communique avec les têtes de réseau 2a, 2b et les modems récepteurs 3.

Préférentiellement, le gestionnaire de réseau 4 comprend aussi une interface numérique de gestion 22 ― par exemple de type Ethernet - pour assurer les fonctions d'administration et de contrôle. Elle permet par exemple à un opérateur de connecter un ordinateur portable avec un cordon ou il peut s'agir d'une liaison filaire dédiée permanente reliant le gestionnaire de réseau 4 à un centre de gestion distant.

Le gestionnaire de réseau 4 répertorie les différents modules sources disponibles dans chaque tête de réseaux 2a, 2b avec leurs fonctionnalités et performances telles que les bandes de fréquences accessibles, le nombre d'entrées du module, le niveau de compression MPEG 2 ou MPEG 4, le nombre d'images fournies par seconde,. Ces informations sont fournies au gestionnaire de réseau 4 par chaque tête de réseau 2a, 2b de préférence par déclaration par ces dernières ou alternativement sur interrogation par le gestionnaire de réseau 4. Le gestionnaire de réseau 4 répertorie aussi les modems récepteurs 3 connectés au réseau local 1 avec leurs fonctionnalités et performances telles que leur aptitude à recevoir et transformer des flux de données, à émettre des commandes, à exploiter des cartes d'accès chiffré et à décrypter les données codées, leur aptitude à évoluer en supportant le téléchargement de nouveaux logiciels voire de nouveaux paramètres de fonctionnement, la vitesse de transmission des données permise, les normes de décodage et cryptage supportée.

Le gestionnaire de réseau 4 établit l'adéquation et la connexion entre les modules sources des têtes de réseau 2a, 2b et les modems récepteurs 3 selon des règles de gestion établies dans une table de configuration interne.

Par exemple, lorsqu'il reçoit une requête d'un modem récepteur 3 demandant l'accès à une chaîne TV donnée, le gestionnaire de réseau 4 envoie une commande à la tête de réseau 2a, 2b adéquate pour qu'un module adéquat parmi les modules TV 13, 14, 15 ou 16 transmette les données audiovisuelles correspondantes sur un canal donné du réseau local 1 que le gestionnaire de réseau 4 a sélectionné. Dans la mise en oeuvre préférée recourant à des canaux virtuels et utilisant le protocole IP, le canal virtuel correspond en fait au flux de données correspondant identifié par l'adresse IP de la source et éventuellement l'adresse IP de destination du flux.

La commande adressée par le gestionnaire de réseau 4 à la tête de réseau peut aussi comprendre la chaîne TV demandée pour que le module source concerné la syntonise. Et le gestionnaire de réseau 4 envoie au modem récepteur 3 concerné l'identification du canal sélectionné sur lequel le modem récepteur 3 recevra alors la chaîne TV demandée.

En variante, c'est le modem récepteur 3 qui envoie à la tête de réseau une requête de syntonisation sur la chaîne demandée par le canal du réseau local 1 dont l'identification lui a précédemment été envoyé par le gestionnaire de réseau 4.

Le gestionnaire de réseau 4 met en place des liaisons points à points entre les modules sources des têtes de réseau 2a, 2b et les modems récepteurs 3. Dans le cas du protocole IP, ceci est obtenu par l'identification du flux par l'adresse IP de la source et l'adresse IP de destination du flux.

Mais, pour optimiser l'utilisation des canaux du réseau local 1 et des modules sources des têtes de réseaux 2a, 2b, le gestionnaire de réseau 4 peut aussi assurer la diffusion des données d'une source extérieure vers l'ensemble des modems récepteurs 3 ou un groupe de modems récepteurs 3 (mode dit « broadcasting » ou « multicasting ») qui dans le cas du protocole IP est mis en oeuvre de façon connue par identification du flux uniquement par l'adresse IP source ou en plus un groupe d'adresses IP de destination. Par exemple, le gestionnaire de réseau 4 a pu mettre en place une liaison point à point entre un module 13 de la tête de réseau 2a et un modem récepteur 3 qui en avait fait la requête, les données audiovisuelles correspondantes étant transmises sur un canal du réseau local sélectionné par le gestionnaire de réseau 4. Si, ensuite un autre modem récepteur 3 présente une requête d'accès à la même chaîne TV au gestionnaire de réseau 4, ce dernier indique à ce modem récepteur 3 ce même canal du réseau local pour recevoir la même chaîne TV. Les deux modems récepteurs 3 concernés recevront donc simultanément les données audiovisuelles par ce même canal source du réseau local et en provenance du même module de la tête de réseau 2.

Ces règles de gestion peuvent être modifiées par l'interface numérique de gestion 22.

Une fois les connexions entre ressources (via la tête de réseau 2 concernée) et modems récepteurs 3 établies, le gestionnaire de réseau 4 organise et surveille la qualité et la performance des connexions et en administre les priorités en cas de dégradation de la bande passante du réseau local 1.

Le gestionnaire de réseau 4 enregistre les évènements relatif au fonctionnement du réseau local 1, des têtes de réseaux 2a, 2b et des modems récepteurs 3 et transmet vers l'interface numérique 22 les alarmes liées à des incidents de fonctionnement de l'installation.

Le gestionnaire de réseau 4 peut aussi être prévu pour envoyer des nouvelles versions de logiciels aux modems récepteurs 3 et têtes de réseau 2a, 2b afin de les mettre à jour.

Il peut être avantageusement prévu que le gestionnaire de réseau 4 réaffecte dynamiquement les ressources (c'est-à-dire les modules sources et la bande passante du réseau local 1) disponibles des têtes de réseau 2a, 2b selon des critères d'optimisation des usages dans l'immeuble concerné. Cette optimisation autorise de disposer d'un nombre de modules sources par source extérieure dans les têtes de réseaux 2a, 2b inférieur au nombre de modems récepteurs 3 en tenant compte de statistiques d'usages, voire par la mise en place d'une stratégie d'apprentissage. Par exemple, le nombre de modules 13 de réception TV par satellite de l'antenne 6a peut être inférieur au nombre de modems récepteurs 3 compte tenu que tout le monde ne regarde pas la télévision en même temps ou ne regarde pas des chaînes différentes.

En raison de son importance dans le fonctionnement du réseau 4, le gestionnaire de réseau peut être construit en architecture redondante par exemple un sur deux ou deux sur trois.

Le gestionnaire de réseau 4 peut être distinct des autres composants du réseau local reliés au câble de distribution 1 comme illustré sur la figure 1B. En variante, il peut également être intégré dans une tête de réseau comme illustré dans la figure 1A où il est intégré à la tête de réseau 2a. Dans ce cas, son rôle peut être assuré par l'unité centrale 11 de la tête de réseau 2. Néanmoins, la réalisation du gestionnaire de réseau 4 désolidarisée des têtes de réseaux peut être avantageuse pour optimiser le contrôle des flux de données et des gains de transmission dans la cas où le réseau local 1 n'est pas réalisé sous forme d'une ligne unique, mais avec une topologie plus complexe, notamment en arborescence ou en étoile auquel cas le gestionnaire de réseau 4 peut être placé respectivement au sommet ou au centre du réseau local 1.

Nous allons maintenant décrire plus en détails un modem récepteur 3 en relation avec la figure 4. Le modem récepteur 3 comprend une unité centrale à processeur 30 et un modem courants porteurs 31 relié au câble de distribution 1. Le modem 31 permet à l'unité centrale 30 de communiquer avec le gestionnaire de réseau 4 et de communiquer avec les têtes de réseaux 2a, 2b, notamment pour recevoir les données des sources extérieures qui lui sont envoyées par les têtes de réseaux 2a, 2b.

Le modem récepteur 3 comprend aussi une interface audio et vidéo 32 ― comprenant de préférence une interface vidéo composite en bande de base - permettant de brancher des dispositifs de restitution des données audio et/ou vidéo tels que un téléviseur 7, une chaîne HI-FI, etc.

L'unité centrale 30 du modem récepteur 3 comprend une interface utilisateur 34, de préférence une commande sans fil. L'interface 34 permet à l'utilisateur de sélectionner la ressource des têtes de réseaux 2a, 2b auquel il souhaite accéder. Elle permet aussi à l'utilisateur de saisir des commandes à destination des têtes de réseau 2a, 2b, par exemple des commandes de zoom ou de mouvement de la caméra de vidéosurveillance 6e.

Pour faciliter la commande du modem récepteur 3, celui-ci peut être prévu pour afficher un menu incrusté à l'écran du téléviseur ou autre organe d'affichage connecté à l'interface 32, ce menu guidant l'utilisateur dans l'utilisation du modem récepteur. Le modem récepteur 3 est informé par le gestionnaire de réseau des ressources auxquels il a accès grâce au réseau local 1.

L'interface utilisateur 34 peut être prévue pour être configurable par l'utilisateur à des fins de personnalisation, par exemple pour attribuer un numéro à chaque chaîne TV auquel il a le droit d'accéder.

L'unité centrale 30 peut aussi comprendre une interface numérique 33 - par exemple du type Ethernet - permettant de connecter par exemple un ordinateur ou un assistant personnel numérique. Cette interface 33 permet l'accès à Internet via le réseau local si une tête de réseaux 2 fournit un tel accès.

Après branchement d'un modem récepteur 3 au réseau local, il se déclare au gestionnaire de réseau 4 et lui indique ses ressources fonctionnelles et performances.

Lorsque l'utilisateur demande l'accès à une ressource d'une tête de réseau par le biais de l'interface utilisateur 34, le modem récepteur 3 transmet la requête au gestionnaire de réseau 4. Lorsqu'il reçoit en retour de celui-ci l'indication du canal du réseau sur lequel la ressource est disponible, le modem récepteur 3 écoute le canal indiqué pour transmettre les données à l'équipement final.

S'agissant de données audio et/ou vidéo (ne provenant pas du réseau public de l'Internet), le modem récepteur 3 décode les flux de données pour les rendre disponible sur l'interface 32.

Le modem récepteur 3 peut encore comprendre un lecteur de carte à puce 35 relié à l'unité centrale 30 pour permettre l'exploitation de données de chiffrement, notamment pour donner accès à certaines chaînes TV. Dans ce cas, les données audiovisuelles cryptées - qui en l'occurrence ne sont pas décryptées par la tête de réseau 2 - sont décryptées par le modem récepteur 3 à l'aide des données inscrites sur la carte à puce insérée dans le lecteur 35.

Concernant les données provenant du réseau public de l'Internet, le modem récepteur 3 les transfère sur l'interface numérique 33 à destination par exemple d'un ordinateur 8.

Pour la mise en oeuvre de la vidéo interphonie, le modem récepteur 3 peut avantageusement comprendre une interface dédiée 36 permettant le raccordement d'un bloc de vidéo interphonie séparé destiné à être installé dans l'appartement. Le bloc de vidéo interphonie comprend un écran d'affichage, un circuit à haut parleur et un microphone ainsi qu'un bouton.

Le modem récepteur 3 décode les flux de données de vidéo interphonie provenant de la caméra 6f₁ et du microphone 6f₂ pour les rendre disponible sur l'interface 36 pour restitution sur l'écran et le haut parleur du bloc de vidéo interphonie. A réception d'un message d'avertissement de la présence d'un visiteur envoyé par le module 18, le modem récepteur adresse un signal d'avertissement sonore sur l'interface 36 à restituer par le haut parleur du bloc de vidéo interphonie ou une sonnette dans l'appartement.

Le modem récepteur 3 numérise le son capté par le microphone du bloc de vidéo interphonie et l'envoie au module 18 via le réseau local 1 après l'avoir codé à un format numérique selon une norme décodable par le module 18.

Le modem récepteur 3 envoie une commande d'ouverture de porte au module 18 via le réseau local 1 en réponse à l'appui du bouton prévu à cet effet sur le bloc de vidéo interphonie.

En variante, il peut être prévu un modem récepteur 3 d'un type dédié uniquement à la vidéo interphonie qui intègre l'ensemble des éléments du bloc de vidéo interphonie. Dans ce cas, le modem récepteur 3 ne comprend pas les interfaces 32 et 33 et l'interface utilisateur 34.

Optionnellement, les modems récepteurs 3 peuvent être reliés au câble de distribution 1 par l'intermédiaire de coupleurs de réseau 5. Un seul coupleur 5 a été représenté sur la figure 1B. Si le câble de distribution 1 constituant le réseau est le réseau d'alimentation électrique de l'immeuble, le coupleur 5 est placé entre le disjoncteur de branchement de l'appartement et le réseau des prises électriques de l'appartement. Le coupleur 5 est constitué d'un filtre 40 coupe bande correspondant à la bande de fréquence utilisée par les modems courants porteurs (généralement 1 à 40 MHz) et d'un routeur 41 couplé à deux modems courant porteurs connectés en amont et en aval du filtre 40. Le filtre 40 permet de dissocier les réseaux électriques collectif 42 et privé 44 pour les fréquence de communication par courants porteurs pour éviter que l'usage privé limite l'usage collectif en induisant une perte de performance sur le réseau local 1. Le coupleur 5 est adapté en impédance à celle du réseau de distribution électrique collectif 42 et privé 44 afin d'optimiser la quantité d'énergie transmise entre eux. Le routeur 41 est de type classique, mais il autorise le transfert des flux en diffusion du réseau électrique collectif vers le réseau électrique privatif sur une, voire des adresses IP de groupes fixées et configurées par le gestionnaire de réseau 4. Ceci permet la transmission sélective de canaux virtuels de programmes diffusés (« multicasting », voire « broadcasting ») vers une liste de récepteurs qui les ont sollicités .

Le routeur 41 permet d'accroître la performance globale du système, mais il est optionnel et peut donc être omis notamment dans les installations simples et bon marché.

Comme déjà indiqué, lorsque les sources extérieures fournissent des données audio et/ou vidéo, les têtes de réseau 2a, 2b assurent le codage de ces données dans un format numérique suivant une norme donnée décodable par les modems récepteurs 3 destinataires et les envoient ainsi codées sur le réseau local 1. Par souci de simplification, il peut être prévu que tous les modules concernés des têtes de réseau code les données audio et/ou vidéo reçues vers une seule et même norme, par exemple Mpeg 2 ou Mpeg 4, auquel cas les modems récepteurs 3 ont seulement à décoder les données audio et/ou vidéo suivant cette seule norme.

Mais il peut être avantageux que plusieurs normes de codage soient utilisées dans l'installation en fonction des exigences de qualité des applications concernées. Ainsi, il peut être avantageusement prévu :
- une norme spécifique pour le codage des chaînes TV, par exemple Mpeg 2 ou Mpeg 4 ;
- une norme spécifique pour la vidéo surveillance du fait du besoin de faire des arrêts sur images qui doivent être nettes, par exemple la norme MJPEG ; et
- une norme spécifique pour la vidéo interphonie du fait d'une exigence de qualité vidéo et audio moindre que dans le cas de la TV, par exemple un codec audio de type G723 et la norme vidéo MPEG 4 à vitesse réduite, 500 kb/s par exemple.

Bien entendu, la présente invention n'est pas limitée aux exemples et au mode de réalisation décrits et représentés, mais elle est susceptible de nombreuses variantes accessibles à l'homme de l'art. Ainsi, le réseau peut être formé par plusieurs câbles de distribution 1 en parallèle au lieu d'un seul afin d'augmenter la capacité de transmission simultanée de données. Par exemple, le réseau peut utiliser à la fois la colonne montante d'électricité et un câble coaxial déjà en place formant une colonne verticale de distribution pour véhiculer les données. Dans ce cas, tous les éléments connectés au réseau local 1 - têtes de réseau, gestionnaires de réseau, modem récepteurs et/ou coupleurs - sont pourvus d'un modem courants porteurs respectif pour chaque câble du réseau local 1. La gestion de l'utilisation des câbles pour transmettre les flux de données incombe au gestionnaire de réseau 4 qui affecte chaque flux de données à un seul des câbles, les différents éléments connectés au réseau local 1 assurant la fonction de routage par rapport aux câbles.

Par ailleurs, le réseau local peut être basé sur d'autres technologies que la communication par courants porteurs. Par exemple, il peut être recouru à un réseau local sur fibre optique. Néanmoins, le réseau local par courants porteurs a pour avantage de pouvoir être déployé sur les réseaux électriques ou coaxiaux existants dans les immeubles.

L'installation selon l'invention peut être mis en oeuvre sur des sites autres que des immeubles tels que pour des motels ou des sites industriels comprenant plusieurs bâtiments entre lesquels l'installation est répartie.

## Revendications

1. Installation, comprenant :
- un réseau local (1) ;
- au moins une tête de réseau (2a, 2b) prévue pour recevoir des données audio et/ou vidéo d'au moins une source (6a-6e) extérieure au réseau local, pour coder sous forme numérique lesdites données audio et/ou vidéo selon une norme donnée et pour envoyer lesdites données audio et/ou vidéo codées selon ladite norme sur le réseau local (1); et
- au moins un modem récepteur (3) prévu pour recevoir depuis le réseau local (1) lesdites données audio et/ou vidéo et pour les décoder, le modem récepteur (3) comprenant une interface (32) pour restituer lesdites données audio et/ou vidéo.

2. Installation selon la revendication 1, **caractérisé en ce que** la tête de réseau (2a ; 2b) est prévue pour coder sous forme numérique selon une même norme donnée des données audio et/ou vidéo reçues sous forme codée selon plusieurs normes différentes.

3. Installation selon la revendication 1 ou 2, **caractérisé en ce que** la tête de réseau (2a ; 2b) et le réseau local (1) sont prévus pour transmettre plusieurs flux de données audio et/ou vidéo distincts simultanément.

4. Installation selon la revendication 3, **caractérisé en ce que** le réseau local (1) est réparti en plusieurs canaux de transmission de données dont l'utilisation est gérée par un gestionnaire de réseau (4).

5. Installation selon l'une quelconque des revendications 1 à 4 **caractérisé en ce que** le modem récepteur comprend une interface utilisateur (34) permettant à un utilisateur de sélectionner l'une quelconque parmi une pluralité de sources extérieures et/ou un flux de données audio et/ou vidéo quelconque parmi plusieurs flux disponibles sur une source extérieure, le modem récepteur étant prévu pour envoyer sur le réseau local (1) une requête d'accès à la source extérieure sélectionnée et/ou au flux de données audio et/ou vidéo sélectionné.

6. Installation selon l'une quelconque des revendications 1 à 5, **caractérisé en ce que** ladite au moins une source extérieure comprend au moins une source de réception d'une pluralité de chaînes TV (6a ; 6b ; 6c ; 6d), la tête de réseau (2a) étant prévue pour démoduler et syntoniser les chaînes TV reçues en fonction de commandes reçues depuis le réseau local (1).

7. Installation selon l'une quelconque des revendications 1 à 6, **caractérisé en ce que** ladite au moins une source extérieure comprend au moins une caméra de vidéo surveillance (6e).

8. Installation selon l'une quelconque des revendications 1 à 7, **caractérisé en ce que** la tête de réseau (2b) est reliée à un réseau (6g) de transmission de données numériques distinct du réseau local (1) et permet au modem récepteur (3) d'envoyer vers et de recevoir depuis ledit réseau distinct des données numériques.

9. Installation selon l'une quelconque des revendications 1 à 8,
**caractérisé en ce que** :
- une source extérieure procure simultanément un nombre N de flux de données audio et/ou vidéo ;
- la tête de réseau (2a ;2b) est capable de recevoir, coder et envoyer sur le réseau local (1) de façon simultanée au maximum un nombre M donné de flux de données audio et/ou vidéo provenant de ladite source extérieure, avec M inférieur à N;
- l'installation comprend un nombre P de modems récepteurs (3) ayant le droit d'accéder au nombre N de flux de données audio et/ou vidéo procurés par ladite source extérieure, avec P supérieur à M ; et
- l'installation comprend un gestionnaire de réseau (4) affectant de façon dynamique le nombre M de flux de données audio et/ou vidéo transmis par la tête de réseau (2a ; 2b) audit nombre P de modems récepteurs (3).

10. Installation selon l'une quelconque des revendications 1 à 9, **caractérisé en ce que** le réseau local (1) est à courants porteurs, la tête de réseau (2a ; 2b) et le modem récepteur (3) comprenant chacun un modem courants porteurs connecté au réseau local.

11. Site comprenant une installation selon la revendication 10, dans lequel le réseau local (1) est constitué sur le réseau d'alimentation en énergie électrique du site.

12. Site comprenant une installation selon l'une quelconque des revendications 1 à 10.

13. Site selon la revendication 12, **caractérisé en ce qu'**il comprend une pluralité de modems récepteurs (3) placés dans différents locaux.

14. Site selon l'une quelconque des revendications 11 à 13, **caractérisé en ce que** ladite au moins une source extérieure comprend une caméra (6f₁) et un microphone (6f₂) d'un système de vidéo interphonie placé à une entrée du site et **en ce que** la tête de réseau (2b) est prévue pour décoder des données numériques audio reçues depuis le réseau local (1) et restituer ces données audio sur un haut-parleur (6f₃) du système de vidéo interphonie.

15. Tête de réseau, comprenant :
- des moyens de connexion (10) à un réseau local (1) ;
- des moyens de réception (13-18) de données audio et/ou vidéo provenant d'au moins une source extérieure (6a-6f) ;
- des moyens de codage (13-18) sous forme numérique selon une norme donnée des données audio et/ou vidéo reçues par les moyens de réception ; et
- des moyens d'envoi (10) des données audio et/ou vidéo codées selon ladite norme sur le réseau local (1).

16. Tête de réseau selon la revendication 15, **caractérisé en ce que** les moyens de codage (13-18) sont prévus pour coder sous forme numérique selon une même norme donnée des données audio et/ou vidéo reçues sous forme codées par les moyens de réception (6a-6f) selon plusieurs normes différentes.

17. Tête de réseau selon la revendication 15 ou 16, **caractérisé en ce que** :
- les moyens de réception (13-18) sont prévus pour recevoir simultanément plusieurs flux de données audio et/ou vidéo distincts ; et
- les moyens d'envoi (10) sont prévus pour transmettre simultanément lesdits flux de données audio et/ou vidéo sur le réseau local (1) après codage.

18. Tête de réseau selon l'une quelconque des revendications 15 à 17, **caractérisé en ce que** les moyens de réception (13 ; 14 ; 15 ; 16) sont prévus pour recevoir les signaux d'une source de réception d'une pluralité de chaînes TV (6a ; 6b ; 6c ; 6d), la tête de réseau étant prévue pour démoduler et syntoniser l'une quelconque des chaînes TV en fonction de commandes reçues depuis le réseau local (1).

19. Tête de réseau selon la revendication 18, **caractérisé en ce que** la source de réception est une antenne de réception TV par satellite (6a ; 6b).

20. Tête de réseau selon l'une quelconque des revendications 15 à 19, **caractérisé en ce qu'**elle comprend des moyens de transmission (17) à la source extérieure (6e) de commandes reçues sous forme numérique depuis le réseau local (1).

21. Tête de réseau selon la revendication 20, **caractérisé en ce qu'**elle comprend des moyens (17) de codage des commandes reçues depuis le réseau local (1), les moyens de transmission étant prévue pour transmettre à la source extérieure les commandes codées.

22. Tête de réseau selon l'une quelconque des revendications 15 à 21, **caractérisé en ce qu'**elle comprend des moyens de transmission (17) vers un élément extérieur (6f₃) de données audio et/ou vidéo reçues sous forme numérique depuis le réseau local (1).

23. Tête de réseau selon la revendication 22, **caractérisé en ce qu'**elle comprend des moyens (17) de codage des données audio et/ou vidéo reçues depuis le réseau local (1), les moyens de transmission étant prévue pour transmettre vers l'élément extérieur (6f₃) les données audio et/ou vidéo codées.

24. Tête de réseau selon l'une quelconque des revendications 15 à 23, **caractérisé en ce que** les moyens de réception (13-18) sont prévus pour recevoir simultanément plusieurs flux de données audio et/ou vidéo distincts, la tête de réseau étant prévue pour transmettre après codage un ou plusieurs desdits flux sur le réseau local (1) en fonction de commandes reçues depuis le réseau local (1).

25. Tête de réseau selon l'une quelconque des revendications 15 à 24, **caractérisé en ce qu'**elle comprend un bus auquel sont reliés les moyens d'envoi (10) et **en ce que** les moyens de réception comprennent une pluralité de modules (13-18) de réception de données audio et/ou vidéo de source extérieure, chaque module étant relié au bus.

26. Tête de réseau selon la revendication 25, **caractérisé en ce que** chaque module (13-18) est prévu pour coder sous forme numérique selon une norme donnée les données audio et/ou vidéo reçues par le module de la source extérieure correspondante.

27. Tête de réseau selon l'une quelconque des revendications 15 à 26, **caractérisé en ce qu'**elle comprend des moyens (19) de communication avec un réseau (6g) de transmission de données distinct du réseau local (1), la tête de réseau étant prévue pour transmettre bi directionnellement des données numériques entre le réseau local et le réseau distinct.

28. Tête de réseau selon l'une quelconque des revendications 15 à 27, **caractérisé en ce que** les moyens d'envoi sur le réseau local (1) comprennent un modem courants porteurs (10).

29. Tête de réseau selon la revendication 28, **caractérisé en ce que** le modem courants porteurs (10) est prévu pour transmettre plusieurs flux de données audio et/ou vidéo distincts simultanément par multiplexage par répartition orthogonale de la fréquence.
